(19)

Europäisches
Patentamt
European
Patent Office
Office européen
des brevets

(11)  **EP 2 047 219 B1**

(12)  **EUROPEAN PATENT SPECIFICATION**

(45) Date of publication and mention
of the grant of the patent:
**26.10.2011  Bulletin 2011/43**

(51) Int Cl.:
***G01J 1/32*** *(2006.01)*     ***H05B 33/08*** *(2006.01)*

(21) Application number: **07766739.2**

(86) International application number:
**PCT/IB2007/052245**

(22) Date of filing: **13.06.2007**

(87) International publication number:
**WO 2007/144837 (21.12.2007 Gazette 2007/51)**

(54) **ANGLE SELECTIVE PHOTO SENSOR STRUCTURES FOR ACCURATE COLOR CONTROL, OUT COUPLING AND BACKGROUND REJECTION, IN LED LUMINARIES**

WINKELSELEKTIVE LICHTSENSORSTRUKTUREN ZUR GENAUEN FARBSTEUERUNG, AUSKOPPLUNG UND HINTERGRUNDUNTERDRÜCKUNG IN LED-LEUCHTEN

STRUCTURES DE PHOTODÉTECTEURS SENSIBLES AUX ANGLES POUR UN CONTRÔLE PRÉCIS DES COULEURS, POUR EXTRACTION D'UN RAYONNEMENT GUIDÉ ET RÉJECTION DE L'ARRIÈRE-PLAN DANS DES SOURCESLUMINEUSES À LED

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.06.2006  EP 06115552**

(43) Date of publication of application:
**15.04.2009  Bulletin 2009/16**

(73) Proprietor: **Koninklijke Philips Electronics N.V.**
**5621 BA Eindhoven (NL)**

(72) Inventors:
• **MEIJER, Eduard, J.**
  **5656 AA Eindhoven (NL)**

• **HIKMET, Rifat, A., M.**
  **5656 AA Eindhoven (NL)**

(74) Representative: **Bekkers, Joost J.J**
**Philips**
**Intellectual Property & Standards**
**P.O. Box 220**
**5600 AE Eindhoven (NL)**

(56) References cited:
**US-A- 5 367 399**       **US-A1- 2003 030 808**
**US-A1- 2006 120 247**   **US-B1- 6 429 954**

**Description**

TECHNICAL FIELD

The invention generally relates to measurement of light, and more particularly to an apparatus for measuring light and a luminaire comprising the apparatus for measuring light.

BACKGROUND OF THE INVENTION

It is well known in the art of illumination to combine a number of light emitting diodes (LEDs) with different spectral properties to achieve white light. A common way to realize this is e.g. to combine red, blue and green LEDs.
In order to retain the white light properly, the optical characteristics of each of the present LEDs should be unchanged. However, optical characteristics of a LED vary with temperature, forward current and age.
An increased temperature shifts the spectrum of the LED to longer wavelengths, which means that the color of the LED will change. Additionally, spectral broadening will occur, which means that the color of the LED will not be as distinct as in a lower temperature. Moreover, the light intensity of a LED will decrease with an increased temperature.
However, an increased forward current shifts the spectrum of the LED to shorter wavelengths, which means that a contrary change in color will occur. Further, the light intensity will increase.
Due to aging of the LEDs, a light intensity decrease will occur, as well as a spectral change, which further effects the combined white light.
Another aspect is the batch-to-batch variation, which e.g. means that because of manufacturing circumstances the peak wavelength spread and the intensity spread can vary.
Hence, in order to provide a proper white light from a white light luminaire comprising a number of LEDs with different spectral properties, the dependencies of temperature, forward current and aging of the LEDs have to be taken into consideration. This can be done by introducing a feedback system in the luminaire.
The feedback system determines the properties of the light from the LEDs continuously in order to make sure that each type of LED contributes in a correct manner to the combined white light.
In order to determine the properties of the light, a light measuring arrangement which is arranged to measure the properties of each type of LED, or preferably each individual LED, is used. In order to make the measurement as correct as possible, the influence of surrounding LEDs and ambient light should be as low as possible.
Such a solution is presented in US 2003/0030808, in which an LED luminaire which incorporates an array of red, green and blue LEDs and a feedback arrangement to maintain a desired color balance is disclosed. A single photodiode or an array of photodiodes is positioned to intercept reflected light from a partially reflecting element placed in the path of the combined output of the LED array. Individual colors are measured sequentially by pulsing the LEDs and photodiodes, or by the use of color filters.
In US 2006/120247 a method for producing an optical device that produces a bright image with a good color balance with every reproduction light source used, is disclosed. The exposure amounts of R, G, and B laser light emitted from a fabrication light source are so adjusted that the diffraction efficiency at R, G, and B wavelengths in an optical element is commensurate with the light intensity at the R, G, and B wavelengths in the light emitted from a reproduction light source.

SUMMARY OF THE INVENTION

In view of the above, an objective of the invention is to provide an apparatus for measuring the light output from an LED, which is less affected by external sources, such as other LEDs, other luminaries and ambient light.
Briefly, from one point of view the invention may be described as an apparatus for measuring the light output of an individual LED, wherein the properties of the arrangement reduces the effect of external light without requiring extraordinary behavior of the LEDs, such as pulsing.
A first aspect of the invention is an apparatus for measuring light from a first light emitting device located in a first position, comprising a light transmissive device having at least three surfaces: a first surface, a second surface and a third surface; and a photo sensor; wherein the first surface may be arranged for incoming light from the first position; the second surface may be arranged for reflecting incident light within the light transmissive device the second surface being coated with a reflective layer for reflecting incident light from another position outside the light transmissive device such that said light from said another position incides outside said photosensor; and the third surface may be arranged such that outgoing light incides onto the photo sensor.
An advantage with this aspect of the invention is that light from one direction, i.e. the direction in which the first position is situated, is transmitted to the photo sensor, but light coming from other directions are reflected away from the photo sensor. This means that the impact of ambient light and other light sources are reduced.

In one embodiment of the first aspect the length of the photo sensor may be shorter than the length of the third surface.

An advantage with this is that less light will incide directly onto the photo sensor, or in other words that the light impinging on the photo sensor is to a higher extent reflected on the second surface of the light transmissive device before inciding onto the photo sensor. This means that the light impinging on the photo sensor is gathered to a higher extent.

Another advantage is that ambient light coming in via the first surface and reflected on the third surface, due to a wide angle, and thereafter reflected on the second surface down to the third surface is reduced to a higher extent.

In another embodiment of the first aspect, an optical barrier with an opening may be placed between the third surface of the light transmissive device and the photo sensor.

The advantages of this embodiment is the same as for having a photo sensor which may be shorter than the length of the third surface.

Advantageously, the second surface may be coated with a reflective layer.

An advantage of this is that the light is reflected to a higher extent.

Further, the reflective layer may be a metal layer, e.g. an aluminum layer.

In still another embodiment the apparatus comprise an interference filter for selecting light within a wavelength range, wherein the interference filter may be placed between said third surface of said light transmissive device and said photo sensor.

An advantage with this aspect of the invention is that light reflected on the second surface incides onto the third surface more gathered, which means that the angle dependence of the interference filter is reduced.

Advantageously, the interference filter is a Fabry-Perot filter.

In yet another embodiment the apparatus further comprises an angular limiting structure placed within the light transmissive device.

An advantage with this is that the light inciding onto the photo sensor is gathered to an even higher extent.

Advantageously, the angular limiting structure is a hemispherical lens structure.

In one embodiment the apparatus further comprises an angular limiting structure interference filter placed on the angular limiting structure.

Advantageously, the light transmissive device is made of acrylate.

Advantageously, the second surface and the third surface form an angle and the first surface is opposite the angle.

A second aspect of the invention is a luminaire comprising a light source, an apparatus according to any of the preceding claims for measuring emitted light from said light source, and an electric device for determining whether said measured light is within a predetermined interval.

An advantage with this aspect is that changes in the light source may be detected. This is very useful in applications where the light requirements are very high, e.g. in a situation where light from a number of LEDs is mixed to white light.

In one embodiment the luminaire further comprises a controller for control of said light source based upon said determination made of said electric device.

An advantage with this embodiment is that the properties of the light may be controlled in order to fulfill predetermined requirements.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one in-stance of said element, device, component, means, step, etc., unless explicitly stated otherwise. The steps of any method disclosed herein do not have to be performed in the exact order disclosed, unless explicitly stated.

BRIEF DESCRIPTION OF THE DRAWINGS

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:

Fig. 1 diagrammatically illustrates the general principle of a luminaire comprising a number of LEDs and an apparatus for measuring light.

Fig. 2 diagrammatically illustrates the apparatus for measuring light in more detail, and the optical path of light transmitted through the light transmissive device of the arrangement.

Fig. 3 diagrammatically illustrates a first embodiment of the present invention.

Fig. 4 diagrammatically illustrates a second embodiment of the present invention.

Fig. 5 diagrammatically illustrates a third embodiment of the present invention.

Fig. 6 diagrammatically illustrates a fourth embodiment of the present invention.

Fig. 7 diagrammatically illustrates an angular limiting structure in the form of a hemispherical lens.

Fig. 8 diagrammatically illustrates a fifth embodiment of the present invention.

Fig. 9 diagrammatically illustrates a sixth embodiment of the present invention.

Fig. 10 diagrammatically illustrates a seventh embodiment of the present invention.

Fig. 11 diagrammatically illustrates an eighth embodiment of the present invention.

Fig 12 diagrammatically illustrates a luminaire comprising the apparatus for measuring light.

## DETAILED DESCRIPTION OF PREFERRED EMBODIMENTS

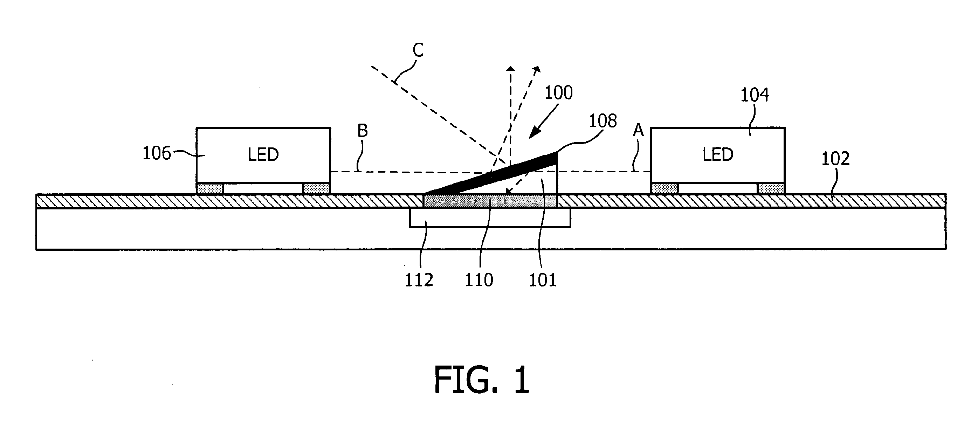

In figure 1 the general principle of the apparatus 100 for measuring light is illustrated.

An apparatus 100 for measuring light from an LED can comprise a light transmissive device 101 and a photo sensor 112, and advantageously also an interference filter 110.

The light transmissive device 101 is placed on a circuit board 102 and has the shape of a wedge, thus comprising a first, a second and a third surface. The third surface of the light transmissive device 101 is directed towards the circuit board, the first surface is directed towards a first LED 104 and the second surface is connecting the first and third surface.

The first LED 104 is placed in a first position and is further the light source which is to be measured. The light emitted from the first LED 104 incides into the light transmissive device 101, and is illustrated by a light beam A.

The first position is such that the light emitted from the first LED 104 incides easily into the apparatus 100, which means that the first position is in front of the first surface of the light transmissive device 101.

A second LED 106 is placed in a second position. The light emitted from the second LED 106 is illustrated by a light beam B.

The second position is such that the light emitted from the second LED 106 incides onto the second surface of the light transmissive device 101 and is thereby reflected away from the apparatus 100.

Ambient light or stray light can occur from other light sources, and is illustrated by a light beam C. In the illustrated case the light beam incides onto the second surface and is reflected away from the apparatus 100.

In order to improve the reflectivity of the second surface, the surface can be coated with a metal layer 108. This metal layer can e.g. be an aluminum layer.

The second surface does not only reflect outer light, such as the light from the second LED 106, illustrated as light beam B, or ambient light, illustrated as light beam C, but also light within the light transmissive device 101, such as the light from the first LED 104, illustrated as light beam A.

After the light from the first LED 104, illustrated as light beam A, has been reflected on the second surface it can incide onto the interference filter 110. The purpose of the interference filter is to filter out light with a certain wavelength, such as 520 nm if the first LED 104 is a green LED with wavelength 520 nm. The interference filter can e.g. be a Fabry Perot interferometer.

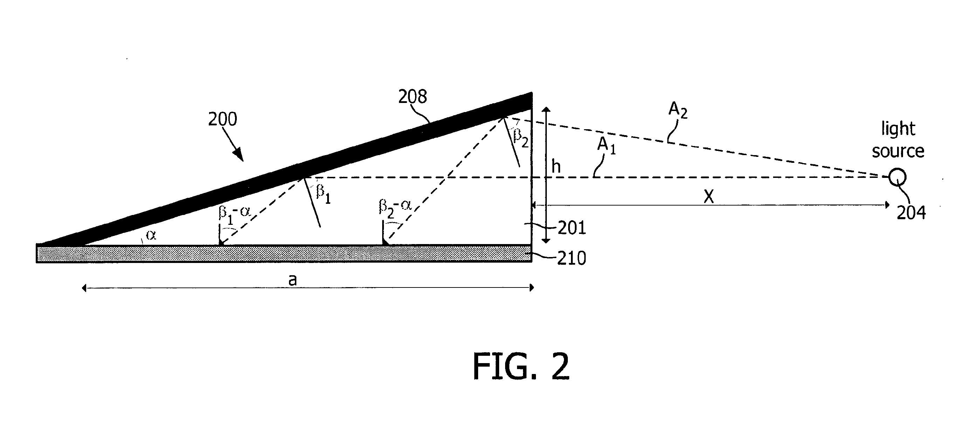

Because the light inciding onto the interference filter has come into the light transmissive device 101 via the first surface and has been reflected on the second surface, the interval for the angle of incidence for the light inciding onto the interference filter has become more narrow. This will further be described in connection to figure 2.

By having light with a more narrow interval of the angle of incidence, the angular dependence of the filter response of the interference filter 110 can be alleviated.

After being transmitted through the interference filter 110 the light incides onto a photo sensor 112, which registers the amount of light.

In figure. 2 the light transmissive device 201 of the apparatus 200 and a first LED 204 are shown in more detail.

The light originating from the first LED 204 inciding onto the first surface of the apparatus 200 is exemplified by two different light beams, A1 and A2. The light beam A1 represents the light inciding directly onto the first surface impinging on the second surface with an angle $\beta_1$, and A2 represents the light inciding near the end of the first surface impinging on the second surface with an angle $\beta_2$.

By choosing the angle between the first and third surface, herein referred to as $\alpha$, the length of the wedge, herein referred to as a, the height of the wedge, herein referred to as h, and the distance between the second surface of the apparatus and the first LED, herein referred to as x, the interval for the angle of incidence onto the interference filter can be adjusted.

If the first LED 204 is assumed to be a point source, which an LED essentially is, and the first LED further is assumed to be placed at the middle of the wedge height, the extreme angles of incidence impinging on an interference filter 210 are given by:

$$\arctan\left(\frac{2x}{h}\right) - 2\alpha < \Theta_{incidence} < 90 - \arctan\left(\frac{h}{2(x+a)}\right) - 2\alpha$$

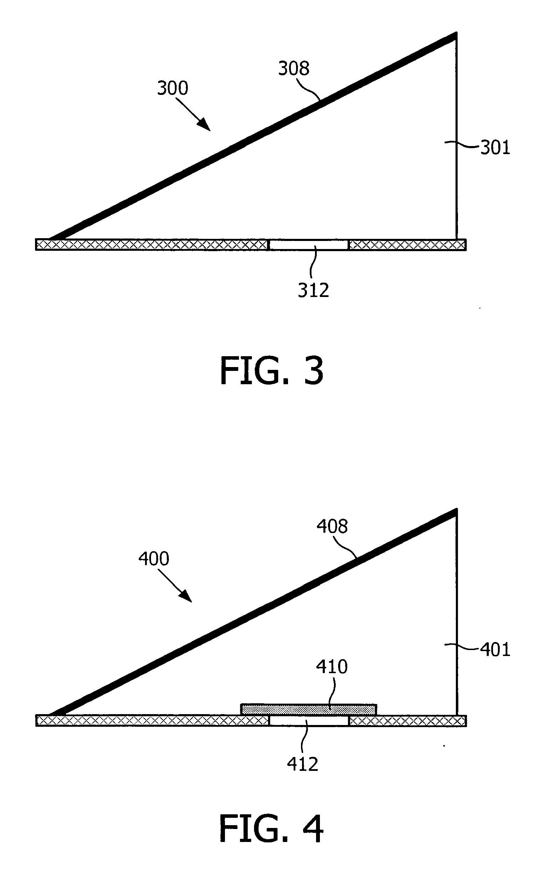

By choosing the length of the wedge to 10 μm (a=10 μm), the angle between the first and second surface to 44° (α=44°), the distance between the first surface and the first LED to 138 μm (x=138 μm) the variation in the angle of incidence is less than 4°. In figure 3, a first embodiment of the invention is illustrated.

In this alternative embodiment of the present invention a photo sensor 312 only covers a part of the length of the third surface of a light transmissive device 301. By only covering a part of the third surface, less light from the first LED will incide direct onto the photo sensor 312, and less light will first reflect on the third surface and thereafter on the second surface and finally onto the photo sensor 312.

In figure 4, a second embodiment of the invention is illustrated.

This embodiment is the same as the first embodiment apart from an interference filter 410 covering a photo sensor 412.

By having the interference filter 410 only light with a predetermined wavelength will be transmitted to the photo sensor 412.

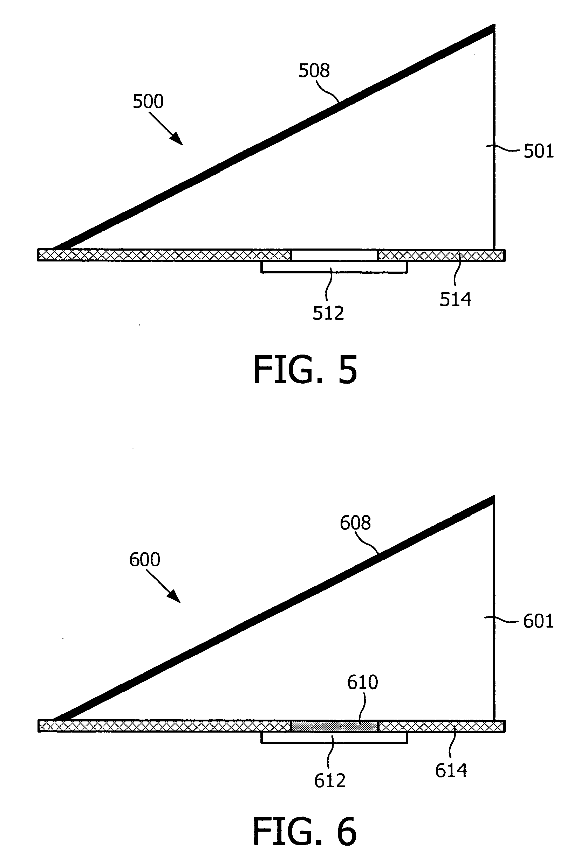

In figure 5, a third embodiment of the invention is illustrated.

In this embodiment parts of a photo sensor 512 is covered by an optical barrier 514. This is an alternative to the second embodiment and has the same advantages as the second embodiment illustrated in figure 4.

In figure 6, a fourth embodiment of the present invention is illustrated.

This embodiment is the same as the third embodiment apart from an interference filter 610 covering a photo sensor 612.

By having the interference filter 610 only light with a predetermined wavelength will be transmitted to the photo sensor 612.

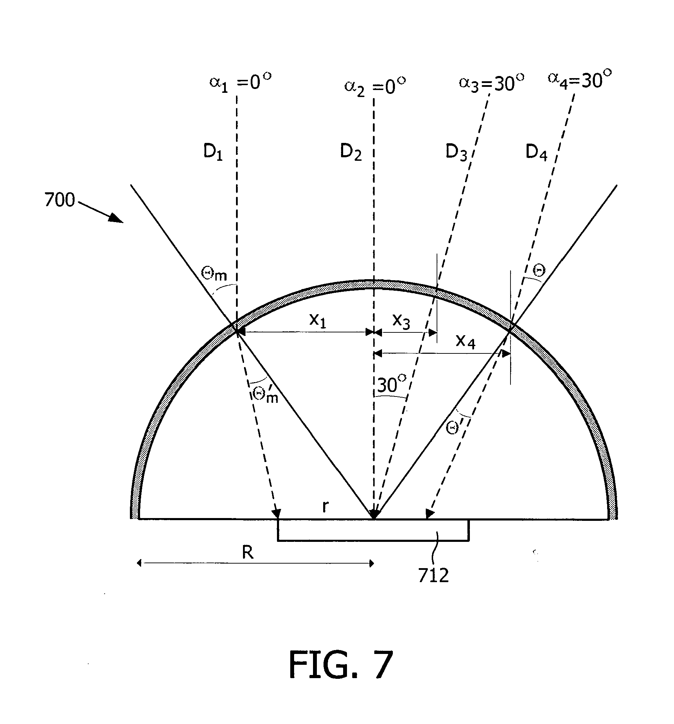

In figure 7, an angular limiting structure 700 in the form of a hemispherical lens structure is illustrated.

One of the reasons the light transmissive device is formed as a wedge is because the interval of the angle of incidence for the light impinging onto the photo sensor becomes more narrow. An effect of this is that the angular dependency of the interference filter is reduced. By introducing an angular limiting structure 700 the angular dependency will be further reduced.

On the spherical surface of the hemispherical lens a spherical lens is placed and on the plane surface of the hemispherical lens a photo sensor 712 is placed in the center of the lens. With this design only light impinging at a small angle with respect to the spherical surface of the hemispherical lens will reach the photo sensor 712. Preferably, the sensor length is smaller than the diameter of the hemispherical lens.

Four exemplified light beams are illustrated; D1, D2, D3 and D4.

D1 impinges onto the hemispherical lens with an angle of incidence of 0° and at a distance $x_1$ from the centerline of the hemispherical lens. The light beam D1 refracts when entering the hemispherical lens and impinges at one end of the photo sensor 712.

D2 impinges onto the hemispherical lens with an angle of incidence of 0° at the centerline. The light beam continues into the hemispherical lens without refraction and impinges in the middle of the photo sensor 712.

D3 impinges onto the hemispherical lens with an angle of incidence of 30° at a distance $x_3$ from the centerline. The light beam continues into the hemispherical lens without refraction, since the angle of incidence corresponds to the angle of the hemispherical lens at the place of incidence, and impinges in the middle of the photo sensor 712.

D4 impinges onto the hemispherical lens with an angle of incidence of 30° and at a distance $x_4$ from the centerline. Since the angle of incidence does not correspond to the angle of the hemispherical lens at the current point, the light beam is refracted before impinging onto the photo sensor 712.

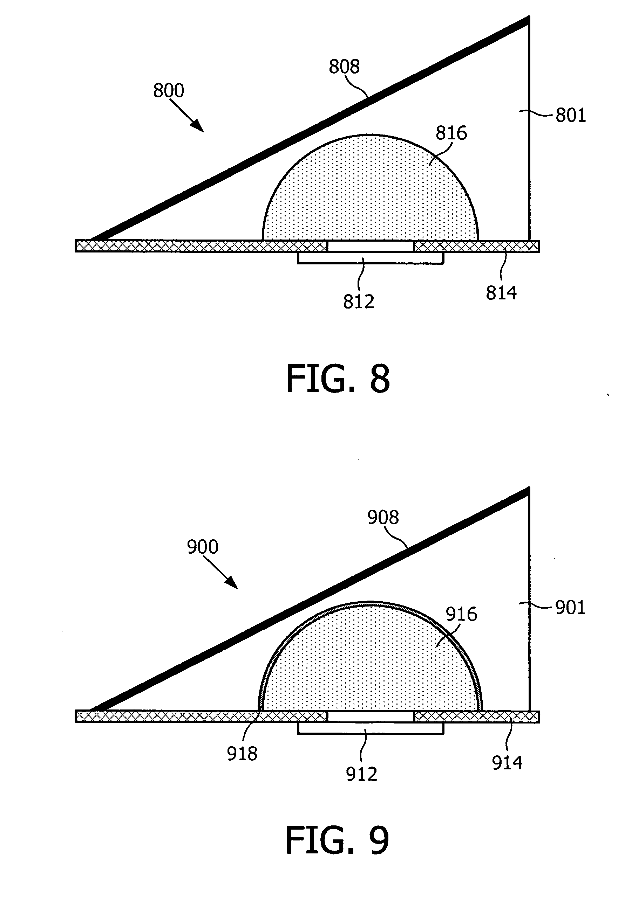

In figure 8, a fifth embodiment of the present invention is illustrated.

The present embodiment is the same as the third embodiment shown in figure 5 apart from that an angular limiting structure 816, here illustrated as a hemispherical lens, is present inside a light transmissive device 801. By having the angular limiting structure 816 present, the angle of incidence of the light impinging onto a photo sensor 812 becomes even more narrow.

In figure 9, a sixth embodiment of the present invention is illustrated.

The present embodiment is the same as the fifth embodiment illustrated in figure 8 apart from that an angular limiting structure interference filter 918 is placed on the surface, situated towards the second surface of the light transmissive device 901, of the angular limiting structure 916. If the angular limiting structure 916 is a hemispherical lens this surface is the spherical surface of the hemispherical lens.

By having the angular limiting structure interference filter 918, only light having the predetermined wavelength corresponding to the interference filter will be transmitted through the angular limiting structure 916, which means that light not having the same wavelength as the light source to be measured will, to a high extent, be hindered to pass through the interference filter 916.

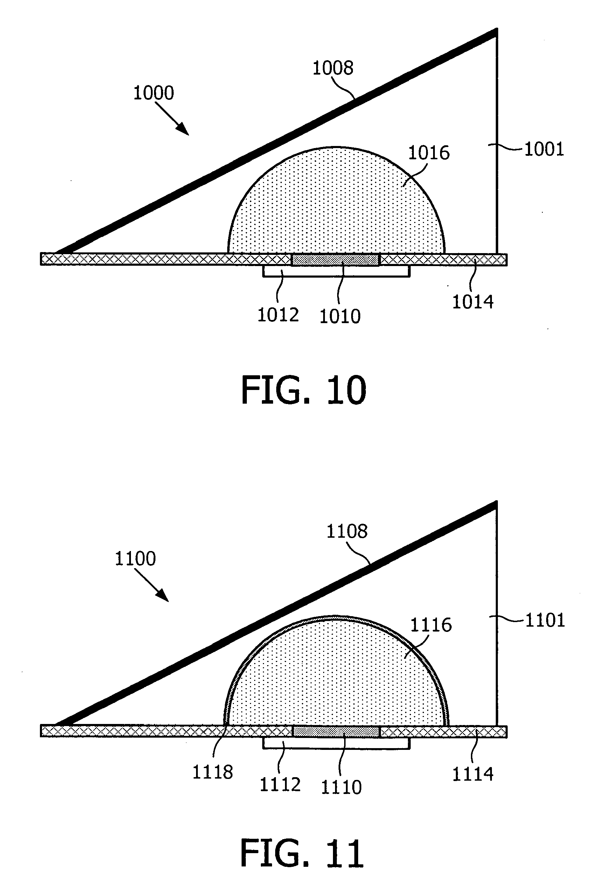

In figure 10, an seventh embodiment of the present invention is illustrated.

The present embodiment is the same as the fifth embodiment shown in figure 8 apart from that an interference filter 1010 is placed between an angular limiting structure 1016 and an photo sensor 1012.

By having the interference filter 1010 placed between an angular limiting structure 1016 and a photo sensor 1012 only light within the predetermined wavelength range corresponding to the interference filter 1010 will be transmitted to the photo sensor 1012, which means that light not having the same wavelength as the light source to be measured will be hindered to transmit to a high extent.

In figure 11, an eighth embodiment of the present invention is illustrated.

The present embodiment is a combination of the sixth and seventh embodiments, in such a way that both an angular limiting structure interference filter 1118 as in the sixth embodiment and an interference filter 1110 as in the seventh embodiment are present.

By having two interference filters, one before the light enters an angular limiting structure 1116 and one after the light leaves the angular limiting structure 1116, light not having the same wavelength as the light source will be hindered to impinge on the photo sensor to a higher extent.

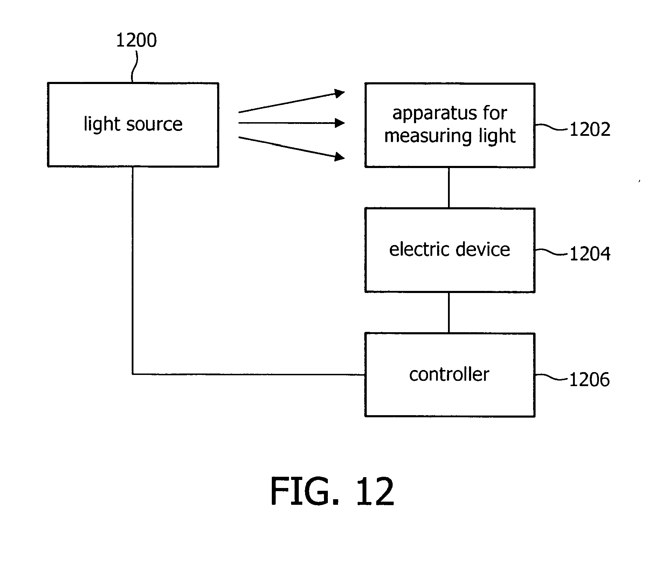

In figure 12, a luminaire comprising a light source 1200, an apparatus 1202 according to any of the above mentioned embodiments for measuring light from the light source 1200, and an electric device 1204 for determining whether the measured light is within a predetermined interval.

Further, the luminaire can also comprise a controller 1206 for control of the light source 1200 based upon the determination of the electric device 1204.

## Claims

1. An apparatus (100) for measuring light from a first light emitting device (104) located in a first position, comprising:

   - a light transmissive device (101) having at least three surfaces: a first surface, a second surface and a third surface; and
   - a photosensor (112);
   **characterized in that** said first surface is arranged for receiving incoming light (A) from said first position; said second surface connects the first and third surfaces and is arranged for reflecting incident light within said light transmissive device (101) towards said third surface, said second surface being coated with a reflective layer (108) for reflecting incident light from another position (B,C) outside said light transmissive device (101) such that said light from said another position is reflected away from said photosensor (112); and said third surface is arranged such that outgoing light incides onto said photosensor (112).

2. The apparatus (100) according to claim 1, wherein a length of said photosensor (112) is shorter than a length of said third surface.

3. The apparatus (500) according to claim 1, wherein an optical barrier (514) with an opening is placed between said third surface of said light transmissive device (501) and said photosensor (512).

4. The apparatus according to any one of the preceding claims, wherein said reflective layer (108) is a metal layer.

5. The apparatus (100) according to claim 4, wherein said metal layer is an aluminium layer.

6. The apparatus (100) according to any of the preceding claims, further comprising an interference filter (110) for selecting light within a wavelength range, wherein said interference filter (110) is placed between said third surface of said light transmissive device (101) and said photosensor (112).

7. The apparatus according to claim 6, wherein said interference filter (110) is a Fabry-Perot filter.

8. The apparatus (800) according to any of the preceding claims, further comprising an angular limiting structure (816) placed within said light transmissive device (801).

9. The apparatus (800) according to claim 8, wherein said angular limiting structure (816) is a hemispherical lens structure.

10. The apparatus (900) according to claim 8 or 9, further comprising
an angular limiting structure interference filter (918) placed on said angular limiting structure (916).

11. The apparatus (100) according to any of the preceding claims, wherein said light transmissive device (101) is made of acrylate.

12. The apparatus (100) according to any of the preceding claims, wherein said second surface and said third surface form an angle and said first surface is opposite said angle.

13. A luminaire comprising:

a light source (1200),
an apparatus (1202) according to any of the preceding claims for measuring emitted light from said light source (1200), and
an electric device (1204) for determining whether said measured light is within a predetermined interval.

14. The luminaire according to claim 13, further comprising
a controller (1206) for control of said light source (1200) based upon said determination of said electric device (1204).


**Patentansprüche**

1. Vorrichtung (100) zum Messen von Licht von einer sich in einer ersten Position befindenden, ersten Licht emittierenden Einrichtung (104), mit:

- einer lichtdurchlässigen Einrichtung (101) mit mindestens drei Oberflächen: einer ersten Oberfläche, einer zweiten Oberfläche und einer dritten Oberfläche; sowie
- einem Photosensor (112);
**dadurch gekennzeichnet, dass** die erste Oberfläche so angeordnet ist, dass sie ankommendes Licht (A) von der ersten Position empfängt;
wobei die zweite Oberfläche die erste und dritte Oberfläche verbindet und so angeordnet ist, dass sie auftreffendes Licht innerhalb der lichtdurchlässigen Einrichtung (101) zu der dritten Oberfläche hin reflektiert, wobei die zweite Oberfläche mit einer reflektierenden Schicht (108) bedeckt ist, um auftreffendes Licht von einer anderen Position (B, C) außerhalb der lichtdurchlässigen Einrichtung (101) so zu reflektieren, dass das Licht von der anderen Position von dem Photosensor (112) weg reflektiert wird, und
die dritte Oberfläche so angeordnet ist, dass ausgehendes Licht auf den Photosensor (112) auffällt.

2. Vorrichtung (100) nach Anspruch 1, wobei eine Länge des Photosensors (112) kürzer als eine Länge der dritten Oberfläche ist.

3. Vorrichtung (500) nach Anspruch 1, wobei eine optische Barriere (514) mit einer Öffnung zwischen der dritten Oberfläche der lichtdurchlässigen Einrichtung (501) und dem Photosensor (512) platziert ist.

4. Vorrichtung nach einem der vorangegangenen Ansprüche, wobei die reflektierende Schicht (108) eine Metallschicht ist.

5. Vorrichtung (100) nach Anspruch 4, wobei die Metallschicht eine Aluminiumschicht ist.

6. Vorrichtung (100) nach einem der vorangegangenen Ansprüche, die weiterhin umfasst:

ein Interferenzfilter (110) zum Auswählen von Licht innerhalb eines Wellenlängenbereichs, wobei das Interferenzfilter (110) zwischen der dritten Oberfläche der lichtdurchlässigen Einrichtung (101) und dem Photosensor (112) platziert ist.

7. Vorrichtung nach Anspruch 6, wobei das Interferenzfilter (110) ein Fabry-Perot-Filter ist.

**8.** Vorrichtung (800) nach einem der vorangegangenen Ansprüche, die weiterhin umfasst:

eine Winkelbegrenzungsstruktur (816), die innerhalb der lichtdurchlässigen Einrichtung (801) platziert ist.

**9.** Vorrichtung (800) nach Anspruch 8, wobei die Winkelbegrenzungsstruktur (816) eine kugelförmige Linsenstruktur ist.

**10.** Vorrichtung (900) nach Anspruch 8 oder 9 mit weiterhin
einem Winkelbegrenzungsstruktur-Interferenzfilter (918), das auf der Winkelbegrenzungsstruktur (916) platziert ist.

**11.** Vorrichtung (100) nach einem der vorangegangenen Ansprüche, wobei die lichtdurchlässige Einrichtung (101) aus Acrylat gefertigt ist.

**12.** Vorrichtung (100) nach einem der vorangegangenen Ansprüche, wobei die zweite Oberfläche und die dritte Oberfläche einen Winkel bilden und sich die erste Oberfläche gegenüber dem Winkel befindet.

**13.** Leuchte mit:

- einer Lichtquelle (1200),
- einer Vorrichtung (1202) nach einem der vorangegangenen Ansprüche zum Messen von emittiertem Licht von der Lichtquelle (1200), sowie
- einer elektrischen Einrichtung (1204), um zu ermitteln, ob das gemessene Licht innerhalb eines vorgegebenen Intervalls liegt.

**14.** Leuchte nach Anspruch 13, die weiterhin umfasst:

eine Steuereinheit (1206) zur Steuerung der Lichtquelle (1200) auf der Grundlage der Ermittlung der elektrischen Einrichtung (1204).

**Revendications**

**1.** Appareil (100) pour mesurer de la lumière à partir d'un premier dispositif émetteur de lumière (104) situé dans une première position, comprenant :

- un dispositif de transmission de lumière (101) possédant au moins trois surfaces : une première surface, une deuxième surface et une troisième surface ; et
- un photocapteur (112) ;
**caractérisé en ce que** ladite première surface est agencée pour recevoir de la lumière arrivant (A) à partir de ladite première position ;
ladite deuxième surface relie les première et troisième surfaces et est agencée pour réfléchir de la lumière incidente au sein dudit dispositif de transmission de lumière (101) vers ladite troisième surface, ladite deuxième surface étant enduite avec une couche réfléchissante (108) pour réfléchir de la lumière incidente à partir d'une autre position (B, C) à l'extérieur dudit dispositif de transmission de lumière (101) de sorte que ladite lumière à partir de ladite autre position soit réfléchie pour être éloignée dudit photocapteur (112) ; et
ladite troisième surface est agencée de sorte que de la lumière sortant soit incidente sur ledit photocapteur (112).

**2.** Appareil (100) selon la revendication 1, dans lequel une longueur dudit photocapteur (112) est inférieure à une longueur de ladite troisième surface.

**3.** Appareil (500) selon la revendication 1, dans lequel une barrière optique (514) avec une ouverture est positionnée entre ladite troisième surface dudit dispositif de transmission de lumière (501) et ledit photocapteur (512).

**4.** Appareil selon une quelconque des revendications précédentes, dans lequel ladite couche réfléchissante (108) est une couche métallique.

**5.** Appareil (100) selon la revendication 4, dans lequel ladite couche métallique est une couche d'aluminium.

**6.** Appareil (100) selon une quelconque des revendications précédentes, comprenant en outre :

un filtre interférentiel (110) pour sélectionner de la lumière au sein d'une plage de longueur d'onde, dans lequel ledit filtre interférentiel (110) est positionné entre ladite troisième surface dudit dispositif de transmission de lumière (101) et ledit photocapteur (112).

7. Appareil selon la revendication 6, dans lequel ledit filtre interférentiel (110) est un filtre de Fabry-Pérot.

8. Appareil (800) selon une quelconque des revendications précédentes, comprenant en outre :

une structure de limitation angulaire (816) positionnée au sein dudit dispositif de transmission de lumière (801).

9. Appareil (800) selon la revendication 8, dans lequel ladite structure de limitation angulaire (816) est une structure de lentille hémisphérique.

10. Appareil (900) selon la revendication 8 ou 9, comprenant en outre :

un filtre interférentiel de structure de limitation angulaire (918) positionné sur ladite structure de limitation angulaire (916).

11. Appareil (100) selon une quelconque des revendications précédentes, dans lequel ledit dispositif de transmission de lumière (101) est fait d'acrylate.

12. Appareil (100) selon une quelconque des revendications précédentes, dans lequel ladite deuxième surface et ladite troisième surface forment un angle et ladite première surface est opposée audit angle.

13. Luminaire, comprenant :

une source lumineuse (1200),
un appareil (1202) selon une quelconque des revendications précédentes pour mesurer de la lumière émise à partir de ladite source lumineuse (1200), et
un dispositif électrique (1204) pour déterminer si ladite lumière mesurée est au sein d'un intervalle prédéterminé.

14. Luminaire selon la revendication 13, comprenant en outre :

un dispositif de commande (1206) pour la commande de ladite source lumineuse (1200) en fonction de ladite détermination dudit dispositif électrique (1204).

FIG. 1

EP 2 047 219 B1

FIG. 2

EP 2 047 219 B1

FIG. 3

FIG. 4

FIG. 5

FIG. 6

FIG. 7

FIG. 8

FIG. 9

FIG. 10

FIG. 11

1200

light source

apparatus for measuring light ─1202

electric device ─1204

controller ─1206

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030030808 A
- US 2006120247 A